# EUROPEAN PATENT SPECIFICATION

(11) **EP 2 142 010 B1**
(45) Date of publication and mention of the grant of the patent: **01.06.2016**
(21) Application number: 08743907.1
(22) Date of filing: 14.03.2008
(51) Int. Cl.: A23L 11/00, A23L 19/00, A23L 5/00

(54) **EXTRUDED LEGUME SNACK FOOD**
STRANGGEPRESSTER IMBISS AUS HÜLSENFRÜCHTEN
ALIMENT EXTRUDÉ DE CASSE-CROÛTE À BASE DE LÉGUMES

(30) Priority: 03.04.2007 US 696023
(43) Date of publication of application: 13.01.2010
(73) Proprietor: Frito-Lay North America, Inc., Plano, TX 75024-4099 (US)
(72) Inventor: BARNETT, Michelle, Latrese, Plano, TX 75024 (US); GAUTAM, Akhilesh, Plano, TX 75025 (US); KELLER, Lewis, Conrad, McKinney, TX 75070 (US); LYKOMITROS, Dimitrios, Dallas, TX 75201 (US); MORALES-ALVAREZ, Jorge, C., Plano, TX 75024 (US); RICHEY, Scott, Alan, Pilot Point, TX 76208 (US)
(74) Representative: Jenkins, Peter David
(86) International application number: PCT/US2008/057029
(87) International publication number: WO 2008/124253

(56) References cited:
- US-A- 5 132 127
- US-A1- 2005 019 467
- US-A1- 2005 118 318
- US-A1- 2006 019 009

## Description

### BACKGROUND OF THE INVENTION

### 1. Technical Field

The present invention relates to a method for making an extruded legume snack food and, more particularly, to a method for making an extruded legume snack that meets specific nutritional goals and has a final shape that is characteristic of the starting material in its natural state.

### 2. Description of Related Art

Legumes, which are also known as dried beans and pulses, are the edible seeds that grown in pods on annual plants, bushes, or vines of the leguminosae family. The seeds can be eaten fresh, sprouted, dried and ground into flour, or prepared in other ways by cooking the legumes. Legumes are often cooked in combination with grains because, when the amino acids contained in the grains and legumes are combined, they provide a complete protein source.

Legumes are a good source of protein and can be a healthy substitute for meat, which has more fat and cholesterol. Legumes are typically low in fat, contain no cholesterol, and are high in protein, folate, potassium, iron, and magnesium. They also have phytochemicals, a group of compounds that may help prevent chronic diseases, such as cardiovascular disease and cancer. In addition, they are an excellent source of fiber, and a diet high in fiber can reduce the risk of developing diabetes and help lower blood cholesterol levels, which in turn reduces the risk of heart disease.

There is a wide variety of legumes consumed by humans. Several of the more common types include black beans, black-eyed peas, chickpeas (garbanzo), fava or broad beans, lima beans, navy beans, peas, pinto beans, soy beans, and red kidney beans.

Consumers have recognized that legumes are an important part of a healthy diet. Consumer studies show that a puffed legume based snack with good nutritional values is a desirable product.

The production in the prior art of a puffed extruded product, such as snacks produced and marketed under the Cheetos™ brand label, typically involves extruding a corn meal or other dough through a die having a small orifice at high temperature and pressure. The dough flashes or puffs as it exits the small orifice, thereby forming a puff extrudate. The typical ingredients for the starting dough may be, for example, corn meal of about 656.8 kg/m³ (41 pounds per cubic foot) bulk density and 11 to 13.5% water content by weight. However, the starting dough can be based primarily on wheat flour, rice flour, soy isolate, soy concentrates, any other cereal flours, protein flour, or fortified flour, along with additives that might include lecithin, oil, salt, sugar, vitamin mix, soluble fibers, and insoluble fibers. The mix typically comprises a particle size of 100 to 1200 microns.

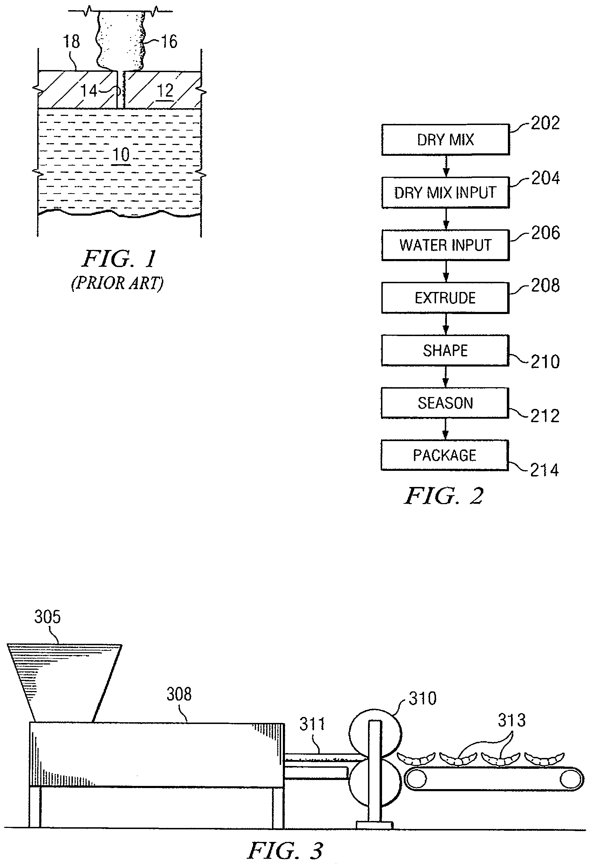

The puff extrusion process is illustrated in **Figure 1****,** which is a schematic cross-section of a die 12 having a small diameter exit orifice **14.** In manufacturing a corn-based puffed product, corn meal is added to, typically, a single (i.e., American Extrusion, Wenger, Maddox) or twin (i.e., Wenger, Clextral, Buhler) screw-type extruder such as a model X 25 manufactured by Wenger or BC45 manufactured by Clextral of the United States and France, respectively. Using a Cheetos like example, water is added to the corn meal while in a twin-screw extruder, which is operated at a screw speed of 100 to 1000 RPM, in order to bring the overall water content of the meal up to 15% to 20%. The meal becomes a viscous melt **10** as it approaches the die **12** and is then forced through a very small opening or orifice **14** in the die **12.** The diameter of the orifice **14** typically ranges between 2.0 mm and 12.0 mm for a corn meal formulation at conventional moisture content, throughput rate, and desired extrudate rod diameter or shape. However, the orifice diameter might be substantially smaller or larger for other types of extrudate materials.

While inside the die assembly, the viscous melt **10** is subjected to high pressure and temperature, such as 4,137 to 20,684 kilopascal (600 to 3000 psi) and approximately 204°C (400° F). Consequently, while inside the small orifice **14,** the viscous melt 10 exhibits a plastic melt phenomenon wherein the fluidity of the melt **10** increases as it flows through the die **12.**

It can be seen that as the extrudate **16** exits the orifice **14,** it rapidly expands, cools, and very quickly goes from the plastic melt stage/phase to a glass transition stage/phase, becoming a relatively rigid structure, referred to as a "rod" shape if cylindrical, puffed extrudate. This rigid rod structure can then be cut into small pieces, further cooked by, for example, frying, and seasoned as required.

Any number of individual dies **12** can be combined on an extruder face in order to maximize the total throughput on any one extruder. For example, when using the twin screw extruder and corn meal formulation described above, a typical throughput for a twin extruder having multiple dies is 998kg (2,200 Ibs.), a reasonable industrial production rate of extrudate per hour, although higher throughput rates can be achieved by both single and twin screw extruders. At this throughput rate, the velocity of the extrudate as it exits the die **12** is typically in the range of 30.5 to 122 metres per minute (100 to 400 feet per minute), but is dependent on the extruder throughput, screw speed, orifice diameter, number of orifices and pressure profile.

As can be seen from **Figure 1****,** a snack food product produced by such process is necessarily a linear extrusion which, even when cut, results in a linear product. Consumer studies have indicated that a legume based product having a similar texture and flavor presented in a shape that is characteristic of the starting product, such as a pea pod shape for a pea based product, would be desirable. Having a shape that is characteristic of the starting material associates such material with the final product. Unfortunately, the high volume process described above provides unique challenges in producing such shape. The rapid transition from the plastic melt stage and the glass transition stage and rapid throughput makes prior art food molding technology, such as is used with cookies, pastas, and bread product, impractical.

Aside from the shape issue, ideally, such extruded legume snack should meet certain nutritional guidelines formulated to meet specific health or wellness benefits. Along these lines, it is desirable to have a nutritious snack that contains, per one ounce serving, no more than 5 grams of fat, that is low in saturated fat, has 0 trans-fatty acids, has less than 25% calories from added sugar, and no more than 240 mgs. sodium.

Consequently, the need exists for a method for making an extruded legume product with specific nutritional formulations that has a final shape that is characteristic of the starting material. For example, a need exists for an extruded pea based snack food that has a final appearance of a pea pod.

US5132127 discusses a process for making a food product that comprises blending a high moisture material, such as a cellular fruit or vegetable material, with one or more low moisture base ingredients, such as a starch, to produce a dough, extruding the dough into a desired shape, cooling and then cutting the dough into pieces and cooking resultant product.

US2005/0019467 discloses a method and apparatus for cutting a puff extrudate utilising a blade that passes through the extrudate while the extrudate is in the viscous melt stage. The blade nicks the extrudate, which allows the extrudate to remain connected thereafter. The nicked extrudate separates when fried or baked.

### SUMMARY OF THE INVENTION

A first aspect of the present invention provides a method for making an extruded snack, which method is as defined in claim 1.

In one embodiment of the invention, green pea powder is mixed with rice flour and fed into an extruder. The extrudate is subsequently formed into the shape of a pea pod by one of several alternative embodiments. In one embodiment, the extrusion die is shaped such that pea pod shapes can be cut from the exiting extrudate. In another embodiment, the extrudate is formed into a hollow tube and then stamped and cut into a pea pod shape. In yet another embodiment, the extrudate exits the extruder as a solid cylindrical shape and is then stamped and cut into a pea pod shape. The end result of this preferred embodiment is a nutritious legume based snack product that resembles a pea pod shape, thus providing the consumer with positive reinforcement of the primary starting ingredient.

These as well as additional features and advantages of the present invention will become apparent in the following written description.

### BRIEF DESCRIPTION OF THE DRAWINGS

The invention itself, as well as a preferred mode of use, further objectives and advantages thereof, will be best understood by reference to the following detailed description of illustrative embodiments when read in conjunction with the accompanying drawings, wherein:
Figure 1 is a schematic cross-section of a prior art puff extrudate die;
Figure 2 is a flowchart indicating the processing steps for the present invention;
Figure 3 is a schematic representation of one forming embodiment of the present invention;
Figure 4 is a schematic representation of a form-cut embodiment of the present invention;
Figure 5 is a cross section of a finished product formed by one embodiment of the invention;
Figure 6 is a plan view of a face-cut die insert embodiment of the present invention; and
Figure 7 is a perspective view of a finished product formed by the face-cut die insert embodiment of the present invention.

### DETAILED DESCRIPTION OF THE PREFERRED EMBODIMENTS

Figure 2 illustrates the processing steps of one method for making the extruded legume snack foods of Applicants' invention. The first step 202 involves a dry mix of the basic ingredients in a low-shear mixing operation. The purpose of the dry mix step 202 is to disburse all of the dry ingredients, which will be described in more detail later. In general, however, the dry ingredients typically comprise a legume-based powder, such as a pea powder, and a starch, such as a wheat flour or rice flour. This dry mix or admix is then inputted 204 into an extruder, such as a twin-screw extruder manufactured by Clextral. After the dry mix is inputted 204, water is additionally added to the extruder in a water input step 206. This water is added in order to bring the moisture level of the entire admix (on a wet basis moisture content in the die extruder) to a level of between 15% to 30% water by weight, or more preferably between 15% to 25% water by weight. Alternatively, the dry mix and water can be mixed prior to extruder input.

The admix is then extruded 208. This extrusion is typically a flash extrusion such that the product emerges as a puffed extrudate going quickly from the plastic melt stage to a glass transition stage. The velocity of the extrudate as it exits the extruder is in excess of 30.5 metres per minute (100 feet per minute, 100 fpm), which Applicants define as a "high velocity discharge." This high velocity discharge is most preferably in the range of 36.6 to 61 metres per minute (120 to 200 feet per minute). In one embodiment of the invention, the extrudate is shaped by the extrudate die itself and forms a facsimile of a pea pod shape when the extrudate is cut as it exits the extruder die. In an alternative embodiment, the extrudate is fed into a shaping or forming device, as will be explained in more detail below, in order to accomplish a shaping and cutting step 210. The purpose of this alternative embodiment shaping and cutting step 210 is to likewise form the extrudate into individual pieces having similar shape characteristics (a similar appearance) to the legume product that is the basic material of the dry mix.

In any event, once the extrudate has been cut into individual pieces either in the extrusion step 208 or the shaping step 210, each individual piece can be dried, if needed to obtain a desirable texture, and then optionally seasoned by means known in the art, such as a seasoning tumbler, seasoning curtain, or sprayed-on seasoning oil. It should be understood that this seasoning step 212 is an optional step and may not be necessary depending on the desired end product.

Finally, the legume snack pieces are packaged 214, typically in a flexible bag by, for example, a vertical form, fill, and seal machine. Once the packaging step 214 is complete, the legume snack pieces are ready for retail sale and consumption by the public.

The extruded snack of the present invention is high in vegetable (legume) content. The nutritional goals for the snack of the present invention include a per-ounce serving of snack chips with no more than 5 grams of fat, less than 1 gram of saturated fat, 0 trans-fatty acids, less than 25% added sugar, and no more than 240 mg. sodium.

In one preferred embodiment, the extruded snack of the present invention incorporates at least 1/3 "serving of vegetables" per 28.35 gram (1 ounce) serving of the snack product (as defined further below). In another preferred embodiment, the extruded snack of the present invention incorporates at least 1/2 serving of vegetables per 28.35 gram (1 ounce) serving of the extruded snack. In yet another preferred embodiment, the extruded snack of the present invention incorporates at least 1 serving of vegetables per 28.35 gram (1 ounce) serving of the snack product.

The United States Department of Agriculture (USDA) defines a serving of vegetables as 1/2 cup of chopped vegetables. For example, 1/2 cup of 2.54cm (1 inch) cubes of raw pumpkin constitutes 1 serving of pumpkin, and 1/2 cup of chopped or sliced raw tomatoes constitutes 1 serving of tomato under the USDA guidelines. A serving of vegetables can be understood as having a moisture content and a solids content. Vegetable solids are defined herein as the non-water components of vegetables. Thus, a serving of vegetables comprises a vegetable solids content on a dry basis. The USDA National Nutrient Database for Standard Reference defines the weight of the edible portion of a vegetable in that 1/2 cup and defines the average moisture and thus the vegetable solids content of the edible portion of a vegetable. **Table 1,** for example, depicts the nutrient profile for 1-cup or 180 grams of a red, ripe, raw, year round average tomato as accessed at http://www.nal.usda.gov/fnic/foodcomp/search/.

**Table 1. Tomatoes, red, ripe, raw, year round average**

| **Nutrient** | **Units** | **Value per 100 grams** | **Number of Data Points** | **Std. Error** | **1.00X1 cup, chopped or sliced** |
|---|---|---|---|---|---|
| | | | | | **180g** |
| **Proximates** | | | | | |
| Waster | g | 94.50 | 33 | 0.159 | 170.10 |
| Energy | kcal | 18 | 0 | | 32 |
| Energy | kj | 75 | 0 | | 135 |
| Protein | g | 0.88 | 19 | 0.039 | 1.58 |
| Total lipid (fat) | g | 0.20 | 26 | 0.034 | 0.36 |
| Ash | g | 0.50 | 19 | 0.018 | 0.90 |
| Carbohydrate, by difference | g | 3.92 | 0 | | 7.06 |
| Fiber, total dietary | g | 1.2 | 5 | 0.234 | 2.2 |
| Sugars, total | g | 2.63 | 0 | | 4.73 |
| Sucrose | g | 0.00 | 12 | 0.002 | 0.00 |
| Glucose (dextrose) | g | 1.25 | 16 | 0.135 | 2.25 |
| Fructose | g | 1.37 | 17 | 0.073 | 2.47 |
| Lactose | g | 0.00 | 9 | 0 | 0.00 |
| Maltose | g | 0.00 | 9 | 0 | 0.00 |
| Galactose | g | 0.00 | 4 | 0 | 0.00 |
| Starch | g | 0.00 | 4 | 0 | 0.00 |

### USDA National Nutrient Database for Standard Reference, Release 19 (2006)

As used herein, a "serving of vegetables" is defined as the amount of vegetable solids content that is equivalent to 1/2 cup (118 cubic centimeters) of vegetables on a dry basis based on the. USDA National Nutrient Database for Standard Reference, Release 19,2006, which is incorporated herein by reference. According to Table 1, one cup of red, ripe, raw, year round average tomatoes weighs 180 grams, has a water content of 94.5 % by weight and a vegetable solids content of 5.5%. One vegetable serving of raw tomatoes (1/2 cup) has a total weight of 90 grams. Consequently, 4.95 grams (5.5% solids content x 90 grams total weight) of tomato solids in a finished product is equivalent to one serving of vegetables. (As known to those skilled in the art, vegetable powders typically have an intrinsic moisture component, e.g., tomato powder is 5% moisture by weight. Consequently, the amount of tomato powder needed for one serving of vegetables may not exactly correspond to the amount of tomato solids needed for one serving of vegetables.) Thus, a snack product having a one-third vegetable serving of tomato would have approximately 1.65 grams of tomato solids in a 28.35 gram (1 ounce) serving of snack product, a snack having a one-half vegetable serving of tomato would have approximately 2.48 grams of tomato solids in a (1 ounce) 28.35 gram serving of snack product, and a snack having one vegetable serving of tomato would have approximately 4.95 grams of tomato solids in a 28.35 gram (1 ounce) serving of the snack product. Consequently, in one embodiment, vegetable or legume powder can be added in an amount sufficient to provide for a one-third vegetable serving, in a preferred embodiment in an amount sufficient to provide for a one-half vegetable serving, and in another preferred embodiment in an amount sufficient to provide for one vegetable serving. As previously noted, one serving of vegetables is defined as the amount of vegetable solids that is equivalent to 1/2 cup (118 cubic centimeters) of a chopped vegetables on a dry basis based on the USDA National Nutrient Database for Standard Reference, Release 19, 2006, which is incorporated herein by reference, it being understood that in this context the terms "vegetable" and "legumes" are used interchangeably.

In a preferred embodiment, green pea powder is mixed with rice flour in a ratio of preferably 50% to 75% by weight pea powder and the remaining substantially by weight of rice flour, with a most preferred range of about 65% by weight green pea powder and about 35% by weight of rice flour. Examples of acceptable pea powder starting ingredients include green pea flakes manufactured by Quest International Fruit and Vegetable Products of Silverton, Oregon, or drum-dried instantized pea flakes manufactured by Van Drunen Farms of Momence, Illinois. An acceptable rice flour can include RF-L0080 rice flour manufactured by Sage Foods of Los Angeles, California. This drymix is fed into a single screw extruder and water is added in order to bring the moisture level of the mixture to between about 15% to about 25% by weight. This hydrated admix is then subjected to work in the extruder through heated barrels of sequentially increasing temperature, typically starting at 26.7°C (80°F) and finishing at 160°C (320°F). The residence time for the admix in the extruder typically is between 20 and 40 seconds, and the extrudate exits the extruder at approximately 151.7°C (305°F) to 171°C (340°F).

The preferred embodiment of pea powder and rice flour described above meets all of the nutritional guidelines previously stated and, further, equates to a 1/2 serving of vegetables per 28.35 gram (ounce) serving of the snack product. Ideally, this product in its final form should also have a shape that resembles the starting material on which the product is based. Stated another way, the finished product should have an appearance associated with the legume starting material. By way of example, a product based on pea powder can be shaped like a pea pod. By way of another example, a product based on peanut material can be shaped like a peanut pod, and so forth.

Figure 3 illustrates a schematic of one embodiment of the forming aspect of Applicants' invention. The admix of the product is delivered to an extruder 308 by way of a hopper 305. Immediately after puff extrusion, the extrudate stream 311 is fed into a forming device 310. This forming device 310, in a preferred embodiment, is located in close proximity to the exit of the extruder 308, so that the extrudate stream 311 enters the forming device 310 as quickly as possible. The goal is to shape the extrudate 311, which exits the extruder 308 in the plastic melt phase, before it becomes brittle or cools to below the glass transition temperature. After the extrudate 311 exits the forming device 310, the finished shape of the molded product 313 is exhibited. The forming device 310 can also cut the final shape 313 into individual segmented pieces. There are several different pieces of equipment that can be used as the forming device 310 in accordance with Applicants' invention, as will be discussed further below.

In an alternative embodiment, the extrudate 311 is stretched as it exits the extruder 308 by, for example, a forming device 310 operating at a slightly higher speed than the discharge rate of the extrudate 311. This stretching step prior to the forming/shaping step must again be done prior to the extrudate cooling to below the glass transition temperature, but before the post-extrusion forming/stamping into a legume or pea pod shape. Performing this stretching step provides for different texture characteristics in the end product as opposed to not stretching the extrudate 311. Further, the stretching step can be used to narrow the diameter of the extrudate rope 311 prior to entering the forming device 310 as a part of the shaping step.

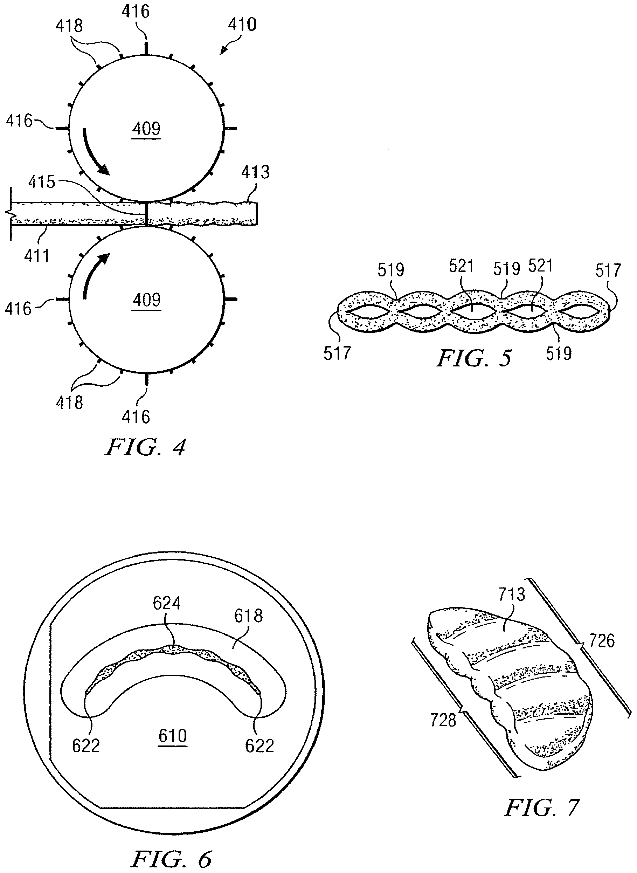

In one embodiment of Applicants' invention, the extrudate stream 311 is extruded as a hollow tube, or in a tubular shape, as opposed to a solid rod shape. Extruding a tubular extrudate 311 provides for the trapping of water vapor and heat inside the tube during shaping, thus making the tube more malleable during forming. This can be further understood with reference to Figures 4 and 5, which show a schematic of a form-cut process of Applicants' invention and a cross-section of a finished product thus formed, respectively. As illustrated in Figure 4, the forming device 410 is a forming/cutting rollers embodiment. This particular embodiment uses two opposed counter-rotating rollers 409 having a plurality of cutting segments (or pads) 416 and shaping pads 418. As the extrudate 411 enters the space between the two counter-rotating rollers 409, the extrudate is cut by the cutting pads or segments 416 and shaped by the shaping pads 418. The cutting occurs when the cutting pad 416 of one roller 409 mates with the opposed cutting pad 416 of another roller 409, thereby cutting the extrudate at that meeting point 415. It should be noted that the segment length of the resultant formed product 413 is, therefore, the circumferential distance from one cutting pad 416 to the next nearest cutting pad 416 on a roller 409.

After being cut, the extrudate 411 is then subjected to the physical manipulation of opposed shaping pads 418, which pinch the extrudate, without cutting it, such that opposed walls of the tubular extrudate mate. This can be best shown by the cross-sectional view of the formed pea pod shaped product illustrated in Figure 5. Applicants refer to the view shown in Figure 5 as a "linear cross-section" of the legume shape illustrated. The ends 517 of the formed product represent the point at which the cutting pads met during the cutting phase of the forming operation. The compressed or pinched points 519 along the top and bottom of the formed product are formed by the shaping pads physically pressing the walls of the tubular extrudate together. As a consequence, the final product has hollow spaces or cavities 521. These cavities 521 trap steam and heat within the core of the extrudate, thus making the extrudate slightly more pliable for a longer period of time.

It should be understood that the forming roller embodiment illustrated by Figure 4 can also be used with a solid or rod extrudate 411, however doing so will obviously not give rise to the voids or cavities 521 shown in Figure 5. Further, the forming device 310 illustrated in Figure 3 can also be a stamping roller as opposed to a forming roller and accomplish similar functions with both a rod extrudate 311 or a tubular extrudate 311.

In a preferred embodiment, the forming rollers 409 can comprise opposed molds in which the extrudate is molded, versus pinched, as it shown in Figure 4. These opposed molds can allow for forming the extrudate into the familiar pea pod shape recognized as such by consumers. This is accomplished by molds that appear as indentations in the rollers 409 of the approximate size of the protrusion that a pea makes when in the pea pod. In combination with a plurality of these indentation molds, opposed cutting pads 416 can again cut the extrudate into individual segments having a plurality of bumps or simulated pea protrusions along the length of the piece.

Referring again to Figure 4, the schematic illustration shows the cutting pads as oriented as a straight edge parallel to the axis of rotation of the roller 409. In fact, in a preferred embodiment, each cutting pad 416 is oriented at an angle, preferable between 30° and 60° canted from the axis of rotation, such that the final product 415 displays an angled cut at each end in relationship to the linear length of the product. It should be further understood that both the cutting pads 416 and shaping pads 418 can be oriented at different angles. Further, the shaping pads 418 need not be of uniform size or even necessarily opposed, depending on the shape of the final product 415 that is desired.

Another embodiment of the forming device 310 of Figure 3 can involve using a track molding device, or opposed molding belts, rather than opposed rollers, to shape the extrudate 311 into the final molded product 313, referred to by Applicants as "track molding." The use of such track molding technology is better suited to a tubular shaped extrudate 311 given the longer dwell time in the former when track molding is used, but track molding can also be used with a rod extrudate 311, depending on the product to be extruded and the shape to be formed.

Figure 6 is a plan view of a die insert 610 alternative embodiment of Applicants' forming technology. In this embodiment, rather than extruding through a small hole or orifice 14 to form a rod 16, as illustrated in Figure 1, Applicants extrude through an orifice 618 having an opening that is similar to the linear cross-sectional shape of the desired shape of the final product, in this instance, and as illustrated in Figure 6, a pea pod. In operation, the extrudate exits the orifice 618 and is quickly cut at the face of the die 610 by an oscillating knife blade (not shown). This face cutting is timed such that the amount of product exiting the orifice 618 is the approximate length of the width of the desired final product shape between each cutting step. It has been found that, because of the difference in the velocity of the extrudate exiting the orifice 618 at either end of the orifice 622 versus towards the center of the orifice 624, the end product has a curved edge and relatively flat edge. This can be best illustrated by viewing a product 713 formed by the die orifice 618 illustrated in Figure 6, as shown in Figure 7. The relatively flat edge 728 of the product 713 occurs due to the cutting knife releasing a piece of the extrudate from the die face 610. The relatively curved edge 726 of the final product 713 shows the variation in the flow rates of the extrudate prior to the cut that occurs along the flatter edge 728. It should also be noted that the final product 713 has a series of mounds that correspond to variations in the opening of the orifice 618.

While it should be understood that the Applicants' forming technology has been explained in relation to the formation of a pea pod shape, the same principles can apply to the shapes of other legume and vegetable shapes, such as a peanut pod, whole carrot, broccoli florets, bean pods, or corn stalks shapes.

Although Applicants' invention has been described specifically with regard to a process for extruding peas, it should be understood that the concepts of Applicants' invention can be applied to any number of legumes, including, without limitation, chickpeas, lima bean, kidney beans, red beans, peas, pinto beans, black-eyed peas, black beans, soy beans, navy beans, mayocoba beans, or cranberry beans. Portions of Applicants' invention also have application to vegetables in general.

## Claims

1. A method for making an extruded snack, said method comprising the steps of:
a) mixing a legume and a starch to form an admix;
b) hydrating said admix;
c) extruding said hydrated admix to form an extrudate in the plastic melt phase, wherein said extrudate exits the extruder as a high velocity discharge; and
d) shaping the extrudate prior to the extrudate cooling to below the glass transition temperature, wherein further said shaping produces a finished product shape having an appearance associated with the legume of step a).

2. The method of Claim 1 wherein the legume of step a) is a pea powder and the shaping of step d) produces a pea pod shape.

3. The method of Claim 2 wherein the starch comprises rice flour.

4. The method of Claim 1 wherein the shaping step d) comprises feeding the extrudate into forming rollers.

5. The method of Claim 1 wherein the shaping step d) comprises feeding the extrudate into stamping rollers.

6. The method of Claim 1 wherein the shaping step d) comprises feeding the extrudate into track molding.

7. The method of Claim 1 wherein the extruding step c) comprises extruding the extrudate through an orifice having a shape approximating a linear cross-section of a legume pod.

8. The method of Claim 7 wherein the orifice consists of a shape approximating a linear cross-section of a pea pod.

9. The method of Claim 1 wherein the legume of step a) is selected from the group consisting of peas, lima beans, chickpeas, pinto beans, kidney beans, red beans, black-eyed peas, black beans, soy beans, navy beans, mayocoba beans, and cranberry beans.

10. The method of Claim 1 wherein the starch of step a) is selected from the group consisting of rice flour, wheat flour, modified corn starch, tapioca starch, and waxy rice flour.

11. The method of Claim 1 wherein the admix is hydrated at step b) to a moisture level of 15% to 25% by weight.

12. The method of Claim 1 wherein the admix of step a) comprises about 65% by weight pea powder and about 35% by weight rice flour.

13. The method of Claim 1 wherein said high velocity discharge extrudate of step c) comprises a hollow tube.

14. The method of Claim 1 wherein the extrudate is stretched after the extruding step c) and before the shaping step d).

15. The method of any foregoing Claim wherein the extruded snack has the shape of a legume pod, and step c) comprises puff extruding to form said extrudate and step d) comprises forming said extrudate into a legume pod shape having an appearance associated with the legume mixed in step a).

## Patentansprüche

1. Ein Verfahren zur Herstellung eines stranggepressten Imbisses, wobei das Verfahren aus folgenden Schritten besteht:
a) Mischen einer Hülsenfrucht und einer Stärke zur Bildung einer Beimischung;
b) Hydratisieren der genannten Beimischung;
c) Strangpressen der genannten hydratisierten Beimischung zur Bildung eines Extrudats in der formbaren Schmelzphase, wobei das genannte Extrudat als hochschnelle Masse aus der Strangpresse austritt; und
d) Formen des Extrudats, bevor sich das Extrudat auf unter Glasübergangstemperatur abkühlt, wobei zudem das genannte Formen ein Endprodukt in einer Form liefert, die mit dem Aussehen der Hülsenfrucht von Schritt a) assoziiert wird.

2. Das Verfahren entsprechend Anspruch 1, wobei die Hülsenfrucht von Schritt a) ein Erbsenpulver ist und das Formen von Schritt d) eine Erbsenschotenform erzeugt.

3. Das Verfahren entsprechend Anspruch 2, wobei die Stärke Reismehl ist.

4. Das Verfahren entsprechend Anspruch 1, wobei der Schritt des Formens d) darin besteht, dass das Extrudat in Formrollen eingeführt wird.

5. Das Verfahren entsprechend Anspruch 1, wobei der Schritt des Formens d) darin besteht, dass das Extrudat in Prägerollen eingeführt wird.

6. Das Verfahren entsprechend Anspruch 1, wobei der Schritt des Formens d) darin besteht, dass das Extrudat in Formschienen eingeführt wird.

7. Das Verfahren entsprechend Anspruch 1, wobei der Schritt des Strangpressens c) darin besteht, dass das Extrudat durch eine Öffnung gepresst wird, die in ungefähr dem linearen Querschnitt einer Hülsenfruchtschote entspricht.

8. Das Verfahren entsprechend Anspruch 7, wobei die Öffnung eine Form hat, die in etwa dem linearen Querschnitt einer Erbsenschote entspricht.

9. Das Verfahren entsprechend Anspruch 1, wobei die Hülsenfrucht von Schritt a) aus der Gruppe bestehend aus Erbsen, Limabohnen, Kichererbsen, Pintobohnen, Gartenbohnen, roten Bohnen, Schwarzaugenbohnen, schwarzen Bohnen, Sojabohnen, blauen Bohnen, Mayocoba-Bohnen und Borlotti-Bohnen ausgewählt wird.

10. Das Verfahren entsprechend Anspruch 1, wobei die Stärke von Schritt a) aus der Gruppe bestehend aus Reismehl, Weizenmehl, modifizierter Maisstärke, Tapiokastärke und Wachsreismehle ausgewählt wird.

11. Das Verfahren entsprechend Anspruch 1, wobei die Beimischung in Schritt b) auf einen Feuchtigkeitsgehalt von 15 bis 25 Gewichts-% hydratisiert wird.

12. Das Verfahren entsprechend Anspruch 1, wobei die Beimischung von Schritt a) ca. 65 Gewichts-% Erbsenspulver und ca. 35 Gewichts-% Reismehl umfasst.

13. Das Verfahren entsprechend Anspruch 1, wobei das genannte hochschnell austretende Extrudat von Schritt c) ein Hohlprofil umfasst.

14. Das Verfahren entsprechend Anspruch 1, wobei das Extrudat nach Schritt c) des Strangpressens und vor Schritt d) des Formens gedehnt wird.

15. Das Verfahren entsprechend einem der vorhergehenden Ansprüche, wobei der stranggepresste Imbiss die Form einer Hülsenfruchtschote hat und Schritt c) darin besteht, dass gepufft stranggepresst wird, um das genannte Extrudat zu bilden, und Schritt d) darin besteht, dass das genannte Extrudat in Form einer Hülsenfruchtschote geformt wird, deren Aussehen mit der in Schritt a) gemischten Hülsenfrucht assoziiert wird.

## Revendications

1. Méthode de préparation d'un en-cas extrudé, ladite méthode comprenant les étapes suivantes :
(a) combinaison d'une légumineuse et d'un amidon pour former un mélange ;
(b) hydratation dudit mélange ;
(c) extrusion dudit mélange hydraté pour former un extrudat dans la phase de fusion plastique, ledit extrudat sortant de l'extrudeuse sous la forme d'un matériau évacué à haute vitesse ; et
(d) formage de l'extrudat avant qu'il ne refroidisse en dessous de la température de transition vitreuse, ledit formage donnant en outre au produit fini une forme dont l'aspect est associé à la légumineuse de l'étape a).

2. Méthode de la revendication 1, dans laquelle la légumineuse de l'étape a) est une poudre de pois et dans laquelle le formage de l'étape d) donne une forme de gousse de pois.

3. Méthode de la revendication 2, dans laquelle l'amidon comprend une farine de riz.

4. Méthode de la revendication 1, dans laquelle l'étape de formage d) comprend l'introduction de l'extrudat dans des rouleaux de formage.

5. Méthode de la revendication 1, dans laquelle l'étape de formage d) comprend l'introduction de l'extrudat dans des rouleaux d'estampage.

6. Méthode de la revendication 1, dans laquelle l'étape de formage d) comprend l'introduction de l'extrudat dans un moule à canaux.

7. Méthode de la revendication 1, dans laquelle l'étape d'extrusion c) comprend l'extrusion de l'extrudat au travers d'un orifice dont la forme se rapproche de la coupe transversale linéaire d'une gousse de légumineuse.

8. Méthode de la revendication 7, dans laquelle l'orifice consiste en une forme qui se rapproche de la coupe transversale linéaire d'une gousse de pois.

9. Méthode de la revendication 1, dans laquelle la légumineuse de l'étape a) est sélectionnée dans le groupe consistant en les suivantes : pois, fèves de Lima, pois chiches, haricots pinto, haricots rouge foncé, haricots rouges, doliques à oeil noir, haricots noirs, graines de soja, haricots blancs, haricots péruviens et haricots canneberges.

10. Méthode de la revendication 1, dans laquelle l'amidon de l'étape a) est sélectionné dans le groupe consistant en les suivants : farine de riz, farine de blé, fécule de maïs modifiée, fécule de tapioca et farine de riz cireux.

11. Méthode de la revendication 1, dans laquelle le mélange est hydraté à l'étape b) à un taux d'humidité de 15 % à 25 % en poids.

12. Méthode de la revendication 1, dans laquelle le mélange de l'étape a) comprend environ 65 % en poids d'une poudre de pois et environ 35 % en poids de farine de riz.

13. Méthode de la revendication 1, dans laquelle ledit extrudat évacué à haute vitesse de l'étape c) comprend un tube creux.

14. Méthode de la revendication 1, dans laquelle l'extrudat est étiré après l'étape d'extrusion c) et avant l'étape de formage d).

15. Méthode de l'une quelconque des revendications précédentes, dans laquelle l'en-cas extrudé a la forme d'une gousse de légumineuse, l'étape c) comprend une extrusion-expansion pour former ledit extrudat et l'étape d) comprend le formage dudit extrudat en un produit en forme de gousse de légumineuse à l'aspect associé à la légumineuse mélangée à l'étape a).
